(19) Europäisches Patentamt
European Patent Office
Office européen des brevets

(11) **EP 4 043 233 B1**

(12) **EUROPEAN PATENT SPECIFICATION**

(45) Date of publication and mention
of the grant of the patent:
**17.12.2025 Bulletin 2025/51**

(21) Application number: **20875515.7**

(22) Date of filing: **10.09.2020**

(51) International Patent Classification (IPC):
*B60B 21/12* (2006.01)     *B60C 11/03* (2006.01)
*B60C 11/13* (2006.01)     *B60C 19/00* (2006.01)
*B60L 5/00* (2006.01)     *B60L 50/53* (2019.01)
*B60L 53/12* (2019.01)     *H02J 50/10* (2016.01)
*B60B 5/02* (2006.01)

(52) Cooperative Patent Classification (CPC):
**B60L 50/53; B60B 21/12; B60C 11/033;
B60C 11/0332; B60C 11/1323; B60C 19/00;
B60L 5/005; B60L 53/12; H02J 50/10;** B60B 5/02;
B60B 2360/104; B60B 2360/30; B60B 2900/921;
B60C 2011/0355; B60L 2220/44;     (Cont.)

(86) International application number:
**PCT/JP2020/034380**

(87) International publication number:
**WO 2021/070557 (15.04.2021 Gazette 2021/15)**

(54) **TIRE/WHEEL ASSEMBLY**

RAD-/REIFENANORDNUNG

ENSEMBLE PNEU/ROUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.10.2019 JP 2019186397**

(43) Date of publication of application:
**17.08.2022 Bulletin 2022/33**

(73) Proprietor: **BRIDGESTONE CORPORATION
Chuo-ku
Tokyo 104-8340 (JP)**

(72) Inventor: **KUWAYAMA Isao
Tokyo 104-8340 (JP)**

(74) Representative: **Marks & Clerk LLP
15 Fetter Lane
London EC4A 1BW (GB)**

(56) References cited:
WO-A1-2015/086310     WO-A1-2019/020886
JP-A- 2004 242 380     JP-A- 2009 078 790
JP-A- 2009 106 136     JP-A- 2009 137 413
JP-A- 2010 023 653     JP-A- 2012 175 869
JP-A- 2015 003 676     JP-A- 2015 003 676
JP-A- 2019 047 691     JP-A- H08 126 106
JP-A- H08 126 106     JP-A- H10 100 613
JP-A- H10 157 410     US-A1- 2016 114 629
US-A1- 2016 121 658

(52) Cooperative Patent Classification (CPC): (Cont.)
B60Y 2200/11; Y02T 10/70; Y02T 10/7072;
Y02T 90/14

## Description

TECHNICAL FIELD

The present invention relates to a tire/wheel assembly.

BACKGROUND

In recent years, vehicles that use electrical energy for power, i.e., electric vehicles, have actively been developed. For example, see patent literature (PTL) 1. This is particularly true in automated driving technology, which is now being implemented in earnest. The development of automated driving technology that uses electric vehicles has progressed given that the use of electric motors is more responsive to vehicle operations than the use of engines.

Along with an overhead wire method, which is a method using wires, wireless methods such as an electromagnetic induction method and an electric field coupling method have been proposed as power supply methods for supplying power to a power reception device of the tire/wheel assembly. PTL 2 discloses a tire/wheel assembly comprising a tire with a tread portion mounted on the rim of a wheel, and comprising a power reception coil. Further reference may be made to tires and tread portions disclosed in PTL 3 and PTL 4.

CITATION LIST

Patent Literature

PTL 1: JP 2018-068077 A
PTL 2: JP H08 126106 A
PTL 3: JP 2015 003676 A
PTL 4: US 2016/121658 A1

SUMMARY

(Technical Problem)

Among these methods, the electromagnetic induction method is a method in which magnetic flux is generated in a direction perpendicular to a road surface, for example, by passing an electric current through a power transmission coil (primary coil) installed on the road surface. The magnetic flux then passes through a power reception coil (secondary coil) on the vehicle side, thereby supplying electrical energy from the power transmission coil to the power reception coil. Technology using the electromagnetic induction method achieves a high power receiving efficiency and is therefore attracting much attention.

The present invention aims to provide a tire/wheel assembly that can achieve high power receiving efficiency during automatic power supply using the electromagnetic induction method.

(Solution to Problem)

A summary of the present invention is as follows.

(1) A tire/wheel assembly includes:

a tire with a tread portion and a wheel with a rim, wherein
the tire is mounted on the rim,
the tire/wheel assembly comprises a power reception coil,
the thickness of the tread portion increases gradually from the tire equatorial plane toward a point on the tread surface located 1/8 of the tread width inward in the tire width direction from the tread edge, and
in a contact patch when the tire/wheel assembly is filled to a prescribed internal pressure and subjected to a maximum load, a rectangle ratio of a ground contact length LE at a position, in a tire width direction, located 10% of a ground contact width W inward in a tread width direction from an edge in the tire width direction to a ground contact length LC at a center of the contact patch in the tire width direction is 50% or more.
The "ground contact width W" refers to the maximum width in the tire width direction of the aforementioned contact patch.

The aforementioned "rim" of the "wheel" refers to a standard rim of an applicable size, such as the Measuring Rim in the STANDARDS MANUAL of the European Tyre and Rim Technological Organisation (ETRTO) in Europe or the Design Rim in the YEAR BOOK of the Tire and Rim Association, Inc. (TRA) in the USA, that is described, or will be described in the future, in industrial standards effective in the region where the tire is manufactured and used, such as the YEAR BOOK published by the Japan Automobile Tyre Manufacturers Association (JATMA) in Japan, the STANDARDS MANUAL of the ETRTO, and the YEAR BOOK of the TRA. (In other words, the "rim" of the "wheel" encompasses not only current sizes but also sizes that may be included in industrial standards in the future. An example of the "size that will be described in the future" is the size described under "future developments" in the ETRTO Standards Manual 2013). In the case of a size not specified in the aforementioned industrial standards, the "rim" refers to a rim whose width corresponds to the bead width of the tire.

The "prescribed internal pressure" represents the air pressure (maximum air pressure) corresponding to the maximum load capability of a single wheel in an applicable size/ply rating described by the aforementioned JATMA or the like. In the case of a size not listed in the industrial standards, the "prescribed internal pressure" refers to the air pressure (maximum air pressure) corresponding to the maximum load capability prescribed for each vehicle on which the tire is mounted.

The "maximum load" refers to the load corresponding to the aforementioned maximum load capability.

Here, the "thickness of the tread portion" refers to the thickness from the outer surface to the inner surface of the tire, including not only the tread rubber but also other components such as the belt, carcass plies, and inner liner, and refers to the thickness of the tread portion as measured in the tire radial direction at a position on the tread surface closest to the tire equatorial plane in the tire width direction. The thickness of the tread portion is assumed to be measured in the tire radial direction at the tire equatorial plane. In a case in which a groove is located on the tire equatorial plane, however, the thickness of the tread portion is defined as the thickness measured in the radial direction on the tire equatorial plane using a virtual line assuming that no groove is included.

(Advantageous Effect)

According to the present invention, a tire/wheel assembly that can achieve high power receiving efficiency during automatic power supply using the electromagnetic induction method can be provided.

BRIEF DESCRIPTION OF THE DRAWINGS

In the accompanying drawings:

FIG. 1 is a diagram using a cross-section in the tire width direction to schematically illustrate a wireless power reception system that includes a tire/wheel assembly according to an embodiment of the present invention;
FIG. 2 is a cross-sectional view of the tire in the tire width direction;
FIG. 3 is a cross-sectional view of the wheel in the tire width direction;
FIG. 4 is a diagram using a cross-section in the tire width direction to schematically illustrate a wireless power reception system that includes a tire/wheel assembly according to a variation of an embodiment of the present invention;
FIG. 5 is a plan view illustrating the ground contact area;
FIG. 6 is a partial cross-sectional view in the tire width direction, illustrating a circumferential main groove of the tire and the surrounding area; and
FIG. 7 illustrates the effects in the case of FIG. 5.

DETAILED DESCRIPTION

Embodiments of the present invention are described below in detail with reference to the drawings. Unless otherwise specified, the dimensions and the like refer to the dimensions and the like when the tire/wheel assembly is filled to the prescribed internal pressure and is under no load.

<Wireless Power Reception System>

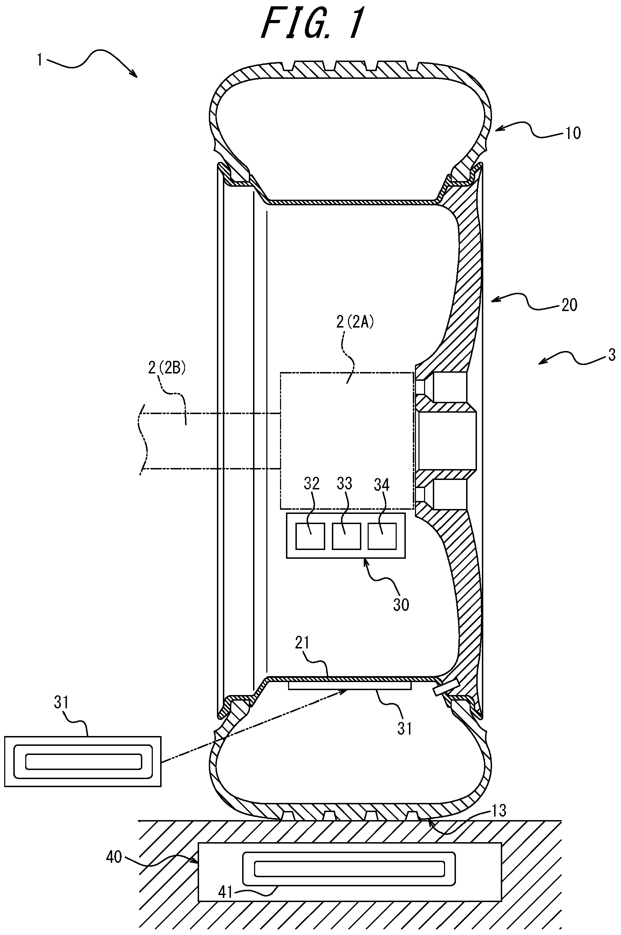

FIG. 1 is a diagram using a cross-section in the tire width direction to schematically illustrate a wireless power reception system that includes a tire/wheel assembly according to an embodiment of the present invention. The wireless power reception system 1 is a system configured to receive electric power transmitted wirelessly from an external power transmission device. The external configuration of the wireless power reception system will be explained first. A power transmission device 40 includes a power transmission coil (primary coil) 41. The power transmission device 40 is installed on the road surface of a road or the like or is buried so as to be located near a road surface. The power transmission coil 41 generates an alternating current (AC) magnetic field based on an AC current supplied from a power source. The power transmission coil 41 is configured to have a ring shape overall and is arranged so that the axial direction of the ring is substantially perpendicular to the road surface to generate an AC magnetic field above the road surface. However, the power transmission coil 41 is schematically illustrated in the drawings. The power transmission coil 41 included in the power transmission device 40 is, for example, wound around a core such as a ferrite core and is configured to have a ring shape overall, but this example is not limiting. The power transmission coil 41 can be any coil capable of generating an AC magnetic field, such as a coil spring, an air-core coil, or the like.

As illustrated in FIG. 1, the wireless power reception system 1 includes a tire/wheel assembly 3 according to an embodiment of the present invention. A power reception device 30, which receives electric power supplied wirelessly, is housed in a housing of the tire/wheel assembly 3 (the housing is a space inside the tire/wheel assembly 3). The tire/wheel assembly 3 is described below.

<<Tire/Wheel Assembly>>

As illustrated in FIG. 1, the tire/wheel assembly 3 according to an embodiment of the present invention includes a tire 10 and a wheel 20 with a rim 21. The tire 10 is mounted on the rim 21 of the wheel 20. The tire 10 and the wheel 20 will be described in turn below.

(Tire)

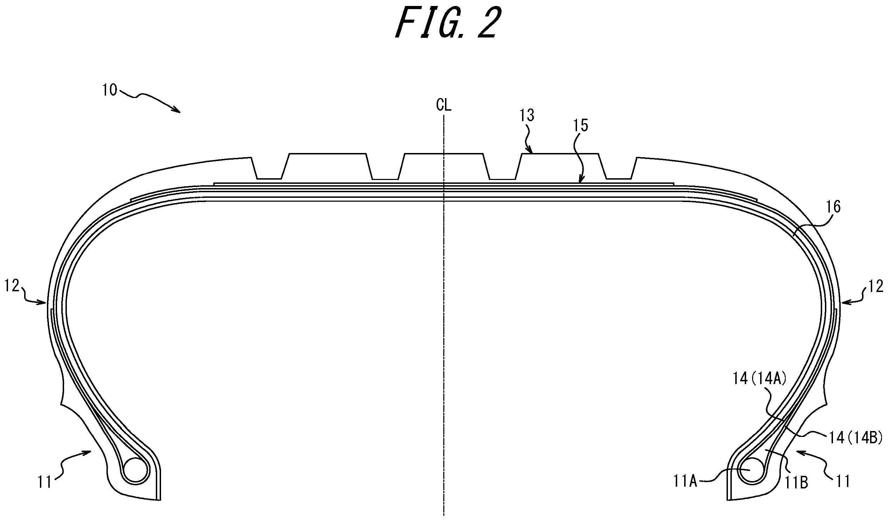

First, an example configuration of the tire 10 will be described. FIG. 2 is a cross-sectional view of the tire 10 in the tire width direction. As illustrated in FIG. 2, the tire 10 includes of a pair of bead portions 11, a pair of sidewall portions 12 connected to the bead portions 11, and a tread portion 13 connected to the pair of sidewall portions 12.

In this example, the bead portions 11 include a bead core 11A and a bead filler 11B. The bead core 11A in this example includes a plurality of bead wires that are covered by rubber. The bead wires are formed by steel cords in this example. The bead filler 11B is formed from rubber or the like and is positioned farther outward in the tire radial direction than the bead core 11A. In this example, the bead filler 11B has a substantially triangular cross-sectional shape whose thickness decreases outward in the tire radial direction. The tire 10 can, however, be structured without the bead cores 11A or the bead fillers 11B.

The bead wires can also be made of a non-magnetic material. Forming the bead wires from a non-magnetic material can ensure that the magnetic field reaching the power reception coil 31 from the power transmission coil 41 is not obstructed by the bead wires. Here, non-magnetic materials refer to materials other than magnetic materials, and magnetic materials refer to materials that exhibits ferromagnetism (ferromagnetic materials). Accordingly, non-magnetic materials include paramagnetic and diamagnetic materials with low magnetic permeability. Resin materials can be used as non-magnetic materials, examples of which include thermoplastic resins such as polyester and nylon, thermosetting resins such as vinyl ester resin and unsaturated polyester resins, and other synthetic resins. The resin material can further include fibers of glass, carbon, graphite, aramid, polyethylene, ceramic, and the like as reinforcing fibers. The non-magnetic material is not limited to resin, and any non-metallic material, including rubber, glass, carbon, graphite, aramid, polyethylene, and ceramic, can be used. Furthermore, a metallic material can be used as the non-magnetic material, including a paramagnetic material such as aluminum or a diamagnetic material such as copper.

As illustrated in FIG. 2, the tire 10 includes a carcass 14 that extends toroidally between the pair of bead portions 11. The end sides of the carcass 14 are engaged with the bead cores 11A. Specifically, the carcass 14 has a carcass body portion 14A disposed between the bead cores 11A and carcass folded-up portions 14B that are folded up from the tire widthwise inner side towards the tire widthwise outer side around the bead cores 11A. The extension length of the carcass folded-up portions 14B from the tire widthwise inner side to the tire widthwise outer side can be set appropriately. The carcass 14 can have a structure without the carcass folded-up portions 14B, or a structure in which the carcass folded-up portions 14B are wrapped around the bead cores 11A.

The carcass 14 can be configured by one or more carcass plies. For example, the carcass 14 can be configured by two carcass layers stacked in the tire radial direction at the tire equatorial plane CL. In the present embodiment, the carcass cords configuring the carcass layers of the carcass 14 are formed from a non-magnetic material (in this example, organic fibers). Alternatively, the carcass cords configuring the carcass 14 can be formed from steel cords.

Non-magnetic materials include paramagnetic and diamagnetic materials with low magnetic permeability. Resin materials can be used as non-magnetic materials, examples of which include thermoplastic resins such as polyester and nylon, thermosetting resins such as vinyl ester resin and unsaturated polyester resins, and other synthetic resins. The resin material can further include fibers of glass, carbon, graphite, aramid, polyethylene, ceramic, and the like as reinforcing fibers. The non-magnetic material is not limited to resin, and any non-metallic material, including rubber, glass, carbon, graphite, aramid, polyethylene, and ceramic, can be used. Furthermore, a metallic material can be used as the non-magnetic material, including a paramagnetic material such as aluminum or a diamagnetic material such as copper.

Although steel cords can also be used for the carcass cords, carcass cords made of a non-magnetic material are preferably used. This can ensure that the magnetic field reaching the power reception coil 31 from the power transmission coil 41 is not obstructed by the carcass 14, and can therefore improve the power receiving efficiency. In the present embodiment, the carcass 14 has a radial structure, but this example is not limiting. The carcass 14 can have a bias structure.

A belt 15 and tread rubber are provided on the outer side, in the tire radial direction, of the crown of the carcass 14. The belt 15 can, for example, be configured by a plurality of belt layers stacked in the tire radial direction. In the present embodiment, the belt cords forming the belt layers of the belt 15 are formed from a non-magnetic material (in this example, organic fibers). Alternatively, the belt cords configuring the belt 15 can be formed from steel cords.

Non-magnetic materials include paramagnetic and diamagnetic materials with low magnetic permeability. Resin materials can be used as non-magnetic materials, examples of which include thermoplastic resins such as polyester and nylon, thermosetting resins such as vinyl ester resin and unsaturated polyester resins, and other synthetic resins. The resin material can further include fibers of glass, carbon, graphite, aramid, polyethylene, ceramic, and the like as reinforcing fibers. The non-magnetic material is not limited to resin, and any non-metallic material, including rubber, glass, carbon, graphite, aramid, polyethylene, and ceramic, can be used. Furthermore, a metallic material can be used as the non-magnetic material, including a paramagnetic material such as aluminum or a diamagnetic material such as copper.

Although steel cords can also be used for the belt cords configuring the belt 15, belt cords made of a non-magnetic material are preferably used. This can ensure that the magnetic field reaching the power reception coil 31 from the power transmission coil 41 is not obstructed by the belt 15, and can therefore improve the power receiving efficiency. The number of belt layers, the inclination angle of the belt cords, the width of each belt layer in the tire width direction, and the like are not particularly limited and can be set appropriately.

As illustrated in FIG. 2, the tire 10 includes an inner liner 16. The inner liner 16 is disposed to cover the inner surface of the tire 10. The inner liner 16 can be configured by one or more inner liner layers stacked in the tire radial direction at the tire equatorial plane CL. The inner liner 16 is, for example, configured by a butyl-based rubber having low air permeability. Examples of butyl-based rubber include butyl rubber and butyl halide rubber, which is a derivative thereof. The inner liner 16 is not limited to butyl-based rubber and can be configured by other rubber compositions, resins, or elastomers.

The sidewall portion 12 may include side reinforcing rubber (not illustrated). The side reinforcing rubber can have a crescent-shaped cross-section, for example. This enables the side reinforcing rubber to shoulder the load when the tire is driven after being punctured. The rubber forming the sidewall portion 12 or the side-reinforcing rubber may include a magnetic material having a large magnetic permeability (e.g., a ferromagnetic material), such as ferrite. This can protect the magnetic field reaching the power reception coil 31 from the power transmission coil 41 from being attenuated due to the influence of metal and other magnetic fields located farther outside the sidewall portion 12 in the tire width direction. The power receiving efficiency can thereby be improved.

The tire is preferably a passenger car tire, and more preferably a passenger car radial tire.

In each of the above examples, the ratio SW/OD of the cross-sectional width SW to the outer diameter OD of the tire 10 is 0.26 or less in the case in which the cross-sectional width SW of the tire 10 is less than 165 (mm), and the cross-sectional width SW (mm) and the outer diameter OD (mm) of the tire 10 preferably satisfy the following relational expression (Relational Expression (1)) in the case in which the cross-sectional width SW of the tire 10 is 165 (mm) or more.=

$$\mathrm{OD\ (mm)} \geq 2.135 \times \mathrm{SW\ (mm)} + 282.3\ (\mathrm{mm})$$

By the ratio SW/OD or Relational Expression (1) being satisfied, the cross-sectional width SW of the tire 10 becomes relatively small in relation to the outer diameter OD of the tire 10, thereby reducing air resistance. The narrower cross-sectional width secures vehicle space, in particular space for installation of drive components near the vehicle-installed inside of the tire.

Furthermore, by the ratio SW/OD or Relational Expression (1) being satisfied, the outer diameter OD of the tire 10 becomes relatively large in relation to the cross-sectional width SW of the tire 10, thereby reducing rolling resistance. The wheel axle also becomes higher due to the larger diameter of the tire 10, expanding the space under the floor and thereby securing space for the trunk and the like of the vehicle and space for installation of drive components.

As described above, by the ratio SW/OD or Relational Expression (1) being satisfied, high fuel efficiency can be achieved for the supplied electrical energy, and a large amount of vehicle space can also be secured.

The cross-sectional width SW (mm) and the outer diameter OD (mm) of the tire 10 also preferably satisfy the following relational expression

$$(\text{Relational Expression (2)}).$$
$$\text{OD (mm)} \geq -0.0187 \times \text{SW (mm)}^2 + 9.15 \times \text{SW (mm)} - 380 \text{ (mm)}$$

).

By Relational Expression (2) being satisfied, the cross-sectional width SW of the tire becomes relatively small in relation to the outer diameter OD of the tire 10, thereby reducing air resistance. The narrower cross-sectional width also secures vehicle space, in particular space for installation of drive components near the vehicle-installed inside of the tire 10.

Furthermore, by Relational Expression (2) being satisfied, the outer diameter OD of the tire becomes relatively large in relation to the cross-sectional width SW of the tire 10, thereby reducing rolling resistance. The wheel axle also becomes higher due to the larger diameter of the tire 10, expanding the space under the floor and thereby securing space for the trunk and the like of the vehicle and space for installation of drive components.

As described above, by Relational Expression (2) being satisfied, high fuel efficiency can be achieved for the supplied electrical energy, and a large amount of vehicle space can also be secured.

In each of the above examples, the tire 10 preferably satisfies the ratio SW/OD and/or Relational Expression (2), or satisfies Relational Expression (1) and/or Relational Expression (2).

In each of the above examples, the tire 10 is preferably configured so that the cross-sectional area S1 of the bead filler 11B in the tire width direction is one or more times and eight or less times the cross-sectional area S2 of the bead core 11A in the tire width direction. A good power supply efficiency and high fuel efficiency can both thereby be achieved.

In the case of a sandwiched bead core structure in which the carcass is held from the tire widthwise inner and outer sides, the total volume of the bead cores on the widthwise inner and outer sides of the carcass is defined as S2.

By the cross-sectional area S1 of the bead filler 11B being set to the above range, the volume of the bead filler, which is a highly rigid member, can be reduced to reduce the longitudinal spring coefficient of the tire and improve ride comfort. In addition, the bead filler can be made lighter to reduce the weight of the tire, thereby further reducing the tire rolling resistance.

In particular, in a narrow width and large diameter tire that satisfies Relational Expression (1) or Relational Expression (2), the tension rigidity of the belt is high, and the tension rigidity of the tire side portions is low compared to the belt. Setting the cross-sectional area S1 of the bead filler to a predetermined range as described above is therefore extremely effective for reducing the longitudinal spring coefficient.

Here, by setting the cross-sectional area S1 of the bead filler 11B in the tire width direction to be eight or less times the cross-sectional area S2 of the bead core 11A in the tire width direction, the volume of the bead filler, which is a highly rigid member, can be prevented from becoming excessively large, and the longitudinal spring coefficient of the tire can be prevented from becoming excessively large. A reduction in ride comfort can thereby be suppressed.

On the other hand, by the cross-sectional area S1 of the bead filler 11B in the tire width direction being one or more times the cross-sectional area S2 of the bead core 11A in the tire width direction, the rigidity of the bead portion can be secured, and the transverse spring coefficient can be prevented from decreasing excessively, thereby securing steering stability.

In the tire 10 of each of the above examples, the following relational expression is preferably satisfied, where BFW is the width in the tire width direction at a central position of the bead filler 11B in the tire radial direction, and BDW is the maximum width in the tire width direction of the bead core 11A.

$$0.1 \leq \text{BFW/BDW} \leq 0.6$$

A good power supply efficiency and high fuel efficiency can both thereby be achieved.

By the ratio BFW/BDW being set to 0.6 or less, the volume of the bead filler is reduced while maintaining the bead filler height. Rigidity can be secured in the tire rotation direction while reducing the longitudinal spring coefficient to improve ride comfort, and the weight of the tire can be reduced.

On the other hand, by the ratio BFW/BDW being set to 0.1 or more, the rigidity of the bead portion can be secured, the transverse spring coefficient can be maintained, and the steering stability can be further secured.

In the tire of each of the above examples, the following relational expression is preferably satisfied, where BFH is the height of the bead filler 11B in the tire radial direction, and SH is the sectional height of the tire (tire section height).

$$0.1 \leq \mathrm{BFH/SH} \leq 0.5$$

A good power supply efficiency and high fuel efficiency can both thereby be achieved.

By the ratio BFH/SH being set to 0.5 or less, the radial height of the bead filler, which is a highly rigid member, can be decreased to effectively reduce the longitudinal spring coefficient of the tire and improve ride comfort.

On the other hand, by the ratio BFH/SH being set to 0.1 or more, the rigidity of the bead portion can be secured, the transverse spring coefficient can be maintained, and the steering stability can be further secured.

Here, the tire sectional height SH refers to 1/2 of the difference between the outer diameter of the tire and the rim diameter in a state with no load when the tire is mounted on the rim and filled to the internal pressure specified for each vehicle on which the tire is mounted.

The height BFH of the bead filler 11B in the tire radial direction is preferably 45 mm or less. A good power supply efficiency and high fuel efficiency can both thereby be achieved.

In each of the above examples, the tire 10 is preferably configured so that the ratio Ts/Tb of the gauge Ts (measured in this cross-section in the direction of the normal line to a tangent at a point on the tire surface in the tire maximum width portion) of the sidewall portion 12 at the tire maximum width portion to the bead width Tb (width of the bead portion 11 in the tire width direction) at the central position of the bead core 11A in the tire radial direction is 15% or more and 60% or less. A good power supply efficiency and high fuel efficiency can both thereby be achieved.

The "tire maximum width portion" refers to the maximum width position in a tire widthwise cross-section when the tire is mounted on the rim and is under no load.

The gauge Ts is the total thickness of all of the members, such as the rubber, the reinforcement member, and the inner liner.

By the ratio Ts/Tb being set to the above range, the rigidity at the tire maximum width portion, where bending deformation is large when the tire is under a load, can be appropriately decreased to reduce the longitudinal spring coefficient and improve ride comfort.

That is, if the ratio Ts/Tb is more than 60%, the gauge of the sidewall portion 12 at the tire maximum width portion increases, and the sidewall portion 12 becomes more rigid, which may result in a higher longitudinal spring coefficient. On the other hand, if the ratio Ts/Tb is less than 15%, the transverse spring coefficient may be reduced too much to secure the steering stability.

In each of the above examples, the tire 10 is preferably configured so that the gauge Ts of the sidewall portion 12 at the tire maximum width portion is 1.5 mm or more. A good power supply efficiency and high fuel efficiency can both thereby be achieved.

By the gauge Ts being 1.5 mm or more, the rigidity at the tire maximum width portion can be maintained at an appropriate level to suppress a reduction in the transverse spring coefficient and to further secure the steering stability.

In each of the above examples, the tire 10 is preferably configured so that the diameter Tbc (maximum width in the tire width direction of the bead core) of the bead core 11A is 3 mm or more and 16 mm or less. A good power supply efficiency and high fuel efficiency can both thereby be achieved.

A diameter Tbc of 3 mm or more can achieve a reduction in weight while ensuring bending rigidity and torsional rigidity on the rim flange, whereas a diameter Tbc of 16 mm or less can achieve steering stability while suppressing an increase in weight.

In the case of a structure in which the bead core is divided into a plurality of small bead cores by the carcass, Tbc may be the distance between the widthwise innermost end and outermost end of all of the small bead cores.

In each of the above examples, the tire 10 is preferably configured so that the footprint area of the tire 10 is 8,000 mm$^2$ or more when the tire 10 is under the maximum load specified for each vehicle on which the tire is mounted. This can achieve both a reduction in the tire rolling resistance and a reduction in the weight of the tire, thereby achieving both good power supply efficiency and high fuel efficiency. In addition, the tire axial force can be secured to improve the stability and safety of the vehicle.

In each of the above examples, the tire 10 is preferably configured so that the Young's modulus of the belt cord is 40,000 MPa or more. This can optimize the carcass structure and the belt rigidity to ensure a tire strength that enables use even at high internal pressure. Furthermore, a good power supply efficiency and high fuel efficiency can both be achieved.

In each of the above examples, the tire 10 is preferably configured so that the thickness of the inner liner 16 is 0.6 mm or more. This can suppress air leakage in a high internal pressure state. Furthermore, a good power supply efficiency and high fuel efficiency can both be achieved.

In each of the above examples, the tire 10 is preferably configured so that the ratio Ts/Tc of the gauge Ts of the sidewall portion 12 at the tire maximum width portion to the diameter Tc of the carcass cord is 4 or more and 12 or less. A good power supply efficiency and high fuel efficiency can both thereby be achieved.

By the ratio Ts/Tc being set to the above range, the rigidity at the tire maximum width portion, where bending deformation is large when the tire is under a load, can be appropriately decreased to reduce the longitudinal spring coefficient and improve ride comfort.

In other words, by the ratio Ts/Tc being 12 or less, the gauge of the sidewall portion 4 in the tire maximum width portion can be prevented from becoming excessively large, and an increase in rigidity, leading to a higher longitudinal spring coefficient, can be suppressed. On the other hand, by the ratio Ts/Tc being 4 or more, the transverse spring coefficient can be prevented from decreasing excessively, and the steering stability can be secured.

In each of the above examples, the tire 10 is preferably configured so that the ratio Ta/Tc of the distance Ta to the diameter Tc of the carcass cord is 2 or more and 8 or less, where Ta is the distance in the tire width direction from the surface of the carcass cord to the tire outer surface at the tire maximum width portion. A good power supply efficiency and high fuel efficiency can both thereby be achieved.

By the ratio Ta/Tc being set to 8 or less, the gauge of the sidewall portion 12 at the tire maximum width portion can be decreased to reduce the rigidity of the sidewall portion 12, thereby reducing the longitudinal spring coefficient and further improving ride comfort. On the other hand, by the ratio Ta/Tc being set to 2 or more, the transverse spring coefficient can be secured to further secure the steering stability.

Note that "Ta" refers to the distance in the tire width direction from the surface of the widthwise outermost carcass cord to the tire outer surface at the tire maximum width portion.

That is, when the carcass folded portion 14B extends radially farther outward than the tire maximum width portion, Ta is the distance in the tire width direction from the surface of the carcass cord 14c at the portion forming the carcass folded-up portion 14B to the tire outer surface.

In each of the above examples, the tire 10 is preferably configured so that the diameter Tc of the carcass cord 14c is 0.2 mm or more and 1.2 mm or less. A good power supply efficiency and high fuel efficiency can both thereby be achieved.

By Tc being set to 0.8 mm or less, the longitudinal spring coefficient can be reduced to improve ride comfort, whereas by Tc being set to 0.4 mm or more, the transverse spring coefficient can be increased to secure the steering stability.

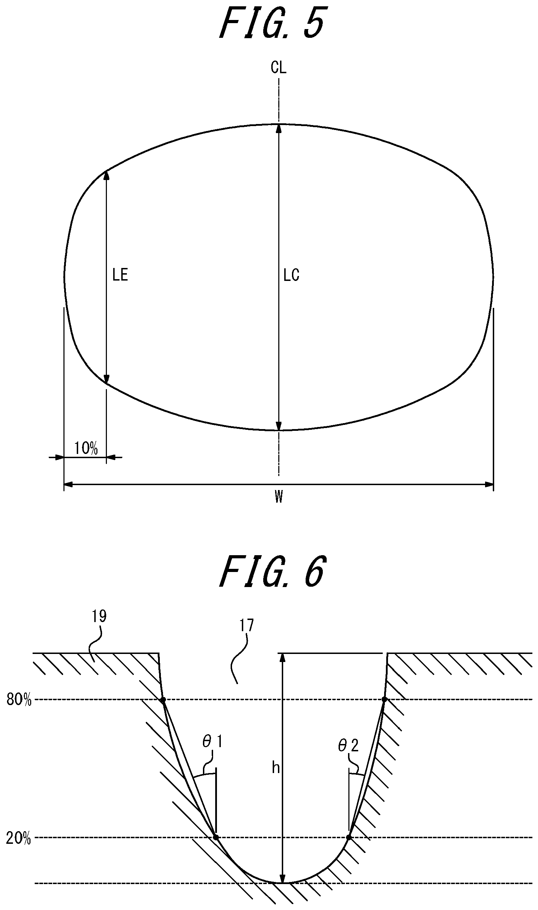

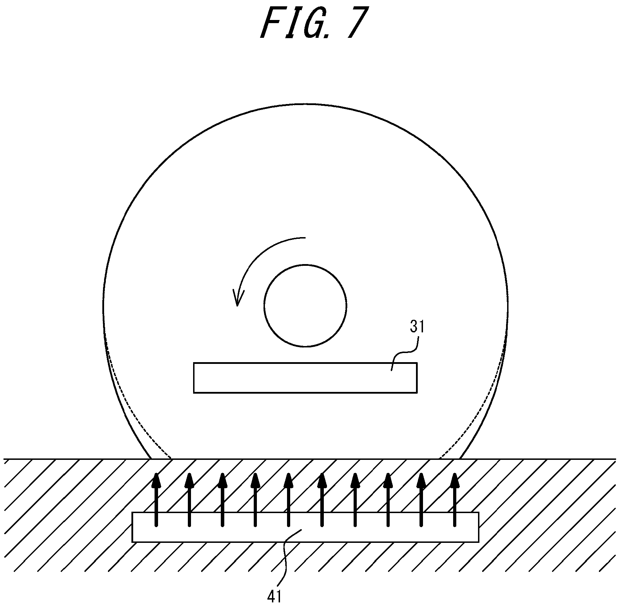

FIG. 5 is a plan view illustrating the ground contact area. FIG. 7 illustrates the effects in the case of FIG. 5. As illustrated in FIG. 5, in a contact patch when the tire/wheel assembly is filled to a prescribed internal pressure and subjected to a maximum load, a rectangle ratio of a ground contact length LE at a position, in the tire width direction, located 10% of the ground contact width W inward in the tread width direction from an edge in the tire width direction to a ground contact length LC at the center of the contact patch in the tire width direction is 50% or more in the present example.

The effects of the tire/wheel assembly of the present embodiment are described below.

In the tire/wheel assembly of the present embodiment, the rectangle ratio is 50% or more.

As illustrated schematically in FIG. 7, when the rectangle ratio is small (indicated by the dashed line), a space is created between the tire and the road surface, and water, foreign matter, or the like can enter the space and obstruct the magnetic flux, lowering the power receiving efficiency. However, by the rectangle ratio being set within the aforementioned range (indicated by the solid line), the space between the tire and the road surface can be eliminated, so that the magnetic flux is not obstructed by water, foreign matter, or the like, thereby improving the power receiving efficiency.

In this way, according to the present invention, a tire/wheel assembly that can achieve high power receiving efficiency during automatic power supply using the electromagnetic induction method can be provided.

Furthermore, if the rectangle ratio is 50% or higher, the energy loss is also reduced, thus improving the fuel efficiency.

The shape of the contact patch is symmetrical with respect to the tire equatorial plane in the present embodiment, but the shape may also be asymmetrical. In this case, if the rectangle ratio, which is the ratio of the ground contact length LE to the ground contact length LC, is 50% or more in either half in the tire width direction, the aforementioned effects can be achieved in that half in the tire width direction.

For further improvement in the power receiving efficiency and fuel efficiency, the rectangle ratio is preferably 60% or more, more preferably 70% or more, and most preferably 80% or more. On the other hand, to improve wear resistance, the rectangle ratio is preferably 110% or less.

To achieve the aforementioned rectangle ratio of 50% or more (preferably 60% or more, 70% or more, or 80% or more), the circumferential rigidity of the shoulder portion should be appropriately reduced. For example, in the tire width direction area including the position in the tire width direction located 10% of the ground contact width W inward in the tire width direction from an edge in the tread width direction, no belt reinforcement layer is disposed, or the number of layers in the belt reinforcement layer is reduced compared to other areas. The number of layers in the belt layer can be smaller than in other areas.

Here, a circumferential main groove extending in the tire circumferential direction is preferably included on the tread surface of the tread portion in the tire equatorial plane.

As described above, the magnetic flux from the power transmission coil 41 is generated upward from the road surface (in the present example, substantially perpendicular to the road surface). When the tire 10 has a circumferential main groove, on the tread surface of the tread portion 13, extending in the tire circumferential direction along the tire equatorial plane CL, most of the magnetic flux generated by the power transmission coil 41 passes through the circumferential main groove on the tire equatorial plane CL and then passes through the power reception coil 31. Since this magnetic flux passes through the portion (air) formed by the circumferential main groove, the magnetic flux intended to reach the power reception coil 31 is less likely to be obstructed than in the case of passing through a portion (tread rubber) with no groove. More magnetic flux can thus reach the power reception coil 31.

Therefore, according to this configuration, high power receiving efficiency can be achieved during automatic power supply using the electromagnetic induction method.

In another configuration of the power receiving coil, the power transmission coil 41 is arranged at an inclination, and the power reception coil 31 is arranged opposite the power transmission coil 41. In other words, the axial direction of the ring of the power transmission coil 41 and the axial direction of the ring of the power reception coil 31 are substantially parallel to each other in this arrangement. In this case as well, as above, more magnetic flux can reach the power reception coil 31, and a high power receiving efficiency can be achieved in automatic power supply using the electromagnetic induction method.

The aforementioned effect can be obtained for a certain degree of magnetic flux even if the axis of the ring of the power transmission coil 41 and the axis of the ring of the power reception coil 31 are not substantially parallel. High power receiving efficiency can thus be achieved.

A circumferential main groove extending in the tire circumferential direction is also preferably included on the tread surface of the tread portion, without being positioned in the tire equatorial plane.

As described above, the magnetic flux from the power transmission coil 41 is generated upward from the road surface (for example, at an inclination relative to the road surface). In the case described below, the power transmission coil 41 is located on the side where the circumferential main groove is located.

In this example, the tire 10 has a circumferential main groove, on the tread surface of the tread portion 13, extending in the tire circumferential direction but not positioned on the tire equatorial plane CL. Most of the magnetic flux generated at an inclination by the power transmission coil 41 therefore passes through the circumferential main groove and then passes through the power reception coil 31. Since this magnetic flux passes through the portion (air) formed by the circumferential main groove, the magnetic flux intended to reach the power reception coil 31 is less likely to be obstructed than in the case of passing through a portion (tread rubber) with no groove. More magnetic flux can thus reach the power reception coil 31.

Therefore, according to this configuration, high power receiving efficiency can be achieved during automatic power supply using the electromagnetic induction method.

For example, the power reception coil 31 can also be arranged at an inclination, and the power reception coil 31 can be arranged opposite the power transmission coil 41. In other words, the axial direction of the ring of the power transmission coil 41 and the axial direction of the ring of the power reception coil 31 are substantially parallel to each other in this arrangement. In this case as well, as above, more magnetic flux can reach the power reception coil 31, and a high power receiving efficiency can be achieved in automatic power supply using the electromagnetic induction method.

Even if the ring of the power transmission coil 41 is substantially parallel to the road surface, the aforementioned effect can be achieved if the circumferential main groove is located above the power transmission coil 41.

In this case, the circumferential main groove can be located either on the vehicle-installed inside or outside.

The "tread surface" refers to the entire surface, in the tire circumferential direction, in the contact patch that comes into contact with the road surface when the tire/wheel assembly is filled to the prescribed internal pressure and subjected to the maximum load.

The "circumferential main groove" refers to a groove that extends in the tire circumferential direction and has a groove width (opening width) of 2 mm or more when the tire/wheel assembly is filled to the prescribed internal pressure and under no load.

The circumferential main groove most preferably extends straight in the tire circumferential direction. The circumferential main groove may, however, extend in the tire circumferential direction while zigzagging or curving. In this case, to improve the power supply efficiency, the circumferential main groove preferably includes a groove portion that continuously extends straight in the tire circumferential direction (a see-through portion (a portion that allows the kicking-out side to be seen without being blocked by the groove wall when the kicking-out side is viewed from the stepping-in side during ground contact)).

The thickness of the tread portion is not particularly limited but is preferably 25 mm or less. Such a thickness can improve the power receiving efficiency while improving the fuel efficiency. For the same reason, the thickness of the tread portion is more preferably 20 mm or less. On the other hand, although not particularly limited, the thickness of the tread portion is preferably 8 mm or more to secure wear resistance. For the same reason, the thickness of the tread portion is more preferably 10 mm or more.

The tread surface of the tread portion 13 can be configured without widthwise grooves extending in the tire width direction, or can include one or more widthwise grooves. The tread surface of the tread portion 13 can also be configured without circumferential sipes extending in the tire circumferential direction or widthwise sipes extending in the tire width direction, or can include one or more circumferential sipes and/or one or more widthwise sipes. The widthwise groove refers to a groove that extends in the tire width direction and has a groove width (opening width) of 2 mm or more when the tire/wheel assembly is filled to the prescribed internal pressure and under no load. The circumferential sipe refers to a sipe that extends in the tire circumferential direction and has a groove width (opening width) of less than 2 mm when the tire/wheel assembly is filled to the prescribed internal pressure and under no load. The widthwise sipe refers to a sipe that has a groove width (opening width) of less than 2 mm when the tire/wheel assembly is filled to the prescribed internal pressure and under no load.

The groove width (opening width) of the widthwise groove is not particularly limited but can, for example, be between 1 mm and 15 mm to achieve both drainage performance and performance for cornering. The groove depth (maximum depth) of the widthwise groove is not particularly limited, but can, for example, be between 2 mm and 10 mm to achieve both antiwear performance and steering stability. For the same reason, the groove depth of the widthwise groove is more preferably 3 mm to 8 mm.

On the tread surface of a tire, the grooves that are connected from one side in the tire circumferential direction to the other without interruption partway through are considered circumferential grooves (including circumferential main grooves), and other grooves are considered widthwise grooves.

The negative ratio of the entire tread surface of the tread portion 13 is not particularly limited but can be 8% to 40%. By the negative ratio of the entire tread surface of the tread portion 13 being set to 8% or more, drainage performance can be further improved, whereas by the negative ratio of the entire tread surface of the tread portion 13 being set to 40% or less, wear resistance can be further improved. For the same reason, the negative ratio of the entire tread surface 13a of the tread portion 13 is more preferably 15% to 35%.

Regarding the arrangement of the circumferential main grooves, it is preferable that no circumferential main groove extending in the tire circumferential direction be provided on the tread surface of the tread portion in the area yielded by projecting the surface of the power reception coil in a direction orthogonal to the surface. This can prevent the circumferential main groove from being filled, which would reduce the power receiving efficiency.

FIG. 6 is a partial cross-sectional view in the tire width direction, illustrating a circumferential main groove and the surrounding area.

In the example illustrated in FIG. 6, the tire 10 includes a shoulder land portion 19, on the tread surface of the tread portion 13, defined by a tread edge (the ground contact edge described below) and a circumferential main groove 17 extending in the tire circumferential direction on the tire equatorial plane CL. An inclination angle $\theta1$ of the wall of the shoulder land portion 19, which is defined by the circumferential main groove 17, is greater than an inclination angle $\theta2$ of the wall of the land portion defined by the circumferential main groove 17 on the inner side in the tire width direction.

The "inclination angle" refers to the inclination angle of a line segment, between points corresponding to 20% and 80% of a groove depth h in the tire radial direction from the groove bottom (deepest location in the groove) of a circumferential main groove, relative to the direction of the normal line to the tread surface at the location of the circumferential main groove, in a tire widthwise cross-sectional view in the aforementioned state.

According to this configuration, the shoulder land portion has a shape such that the width in the tire width direction increases from the outside to the inside in the tire radial direction in a cross-sectional view. This increases the rigidity of the shoulder land portion and improves the wear resistance of the shoulder portion. Therefore, wear of the shoulder portion of the tire can be suppressed.

The inclination angle $\theta1$ can be set larger than the inclination angle $\theta2$ on both sides of the tire in the tire width direction, or the inclination angle $\theta1$ can be set larger than the inclination angle $\theta2$ in only one half portion of the tire 10 in the tire width direction. In this case, wear of the shoulder portion can be suppressed in the corresponding half portion.

Here, the difference $\theta1 - \theta2$ between the inclination angles is preferably greater than 0° and preferably 50° or less. By the difference $\theta1 - \theta2$ being greater than 0°, the wear resistance of the shoulder portion can be further improved by an increase in the rigidity due to the shape of the shoulder land portion, whereas by the difference $\theta1 - \theta2$ being 50° or less, the volume of the circumferential main groove does not increase, and the rigidity of the shoulder land portion can be secured for further improvement in the wear resistance of the shoulder portion. For the same reason, the difference $\theta1 - \theta2$ is more preferably between 1° and 30°. For the same reason, the difference $\theta1 - \theta2$ is more preferably between 2° and 15°.

As an example, the negative ratio of the widthwise grooves on the tread surface of the tread portion 13 is preferably less than the negative ratio of the circumferential main grooves on the tread surface of the tread portion 13 in the tire 10. The "negative ratio of the widthwise grooves" is the ratio of the total groove area of one or more widthwise grooves to the area of the tread surface. In the case of no widthwise grooves being provided, the negative ratio of the widthwise grooves is 0%. The "negative ratio of the circumferential main grooves" is the ratio of the total groove area of one or more circumferential main grooves to the area of the tread surface. In the case of no circumferential main grooves being provided (the case of the other example described below), the negative ratio of the circumferential main grooves is 0%. When no circumferential main grooves are included, the rubber volume can be secured, and wear resistance can be particularly improved.

For example, one or more (for example, one) circumferential main grooves extending in the tire circumferential direction and one or more widthwise grooves extending in the tire width direction can be provided on the tread surface of the tread portion 13. The widthwise grooves may extend from a tread edge inward in the tire width direction. A configuration without widthwise grooves may also be adopted.

This configuration can reduce the striking noise caused by the widthwise grooves during tire rolling, thereby improving the low-noise performance of the tire. Also, compared to the case in which the negative ratios of both the circumferential main grooves and the widthwise grooves are reduced, a reduction in the drainage performance can be suppressed. Furthermore, compared to the case in which the negative ratios of both the circumferential main grooves and the widthwise grooves are increased, a reduction in the wear resistance can be suppressed.

The ratio of the negative ratio of the widthwise grooves to the negative ratio of the circumferential main grooves is preferably between 0% and 70%. In the case of no widthwise grooves (the case of a negative ratio of 0%), the tire no longer makes a striking noise when rolling, and the low-noise performance is particularly improved. The reason is that setting the aforementioned ratio to more than 0% can further suppress a reduction in the drainage performance, whereas setting the aforementioned ratio to 70% or less can further improve the low-noise performance of the tire. For the same reason, the aforementioned ratio is even more preferably between 10% and 60%.

In this case, although not particularly limited, the negative ratio of the circumferential main grooves can be between 8% and 30%, for example, to achieve both antiwear performance and drainage performance. Although not particularly limited, the negative ratio of the widthwise grooves can be between 1% and 21% to achieve both steering stability and drainage performance.

To reduce the negative ratio of the widthwise grooves as described above, the groove width of the widthwise grooves can be reduced (a non-limiting example being 15 mm or less), or the pitch length in the tire circumferential direction can be increased (a non-limiting example being 10 mm or more). An asymmetrical pattern may be adopted. For example, the groove width of the widthwise grooves can be reduced (a non-limiting example being 14 mm or less) in one of the half portions in the tire width direction divided by the tire equatorial plane CL, and the pitch length of the widthwise grooves in the tire circumferential direction can be increased (a non-limiting example being 11 mm or more) in the other half portion in the tire width direction.

As another example, the negative ratio of the widthwise grooves on the tread surface of the tread portion 13 is also preferably greater than or equal to the negative ratio of the circumferential main grooves on the tread surface of the tread portion 13.

For example, one or more (for example, one) circumferential main grooves extending in the tire circumferential direction and one or more widthwise grooves extending in the tire width direction may be provided on the tread surface of the tread portion 13, and the widthwise grooves, for example, may extend from a tread edge inward in the tire width direction. Alternatively, a configuration without circumferential main grooves may be adopted.

According to this configuration, significant drainage performance can be secured by the widthwise grooves, and the hydroplaning performance (in particular, the hydroplaning performance during cornering) can be improved. Furthermore, compared to the case in which the negative ratios of both the circumferential main grooves and the widthwise grooves are increased, the wear resistance of the tire can be secured. Compared to the case in which the negative ratios of both the circumferential main grooves and the widthwise grooves are decreased, the drainage performance of the tire can be improved.

The aforementioned ratio of the negative ratio of the widthwise grooves to the negative ratio of the circumferential main grooves is preferably between 100% and 200%. By the aforementioned ratio being set to 100% or more, the hydroplaning performance of the tire during cornering can be further improved, whereas by the ratio being set to 200% or less, the wear resistance of the tire can be further improved. For the same reason, the aforementioned ratio is even more preferably between 110% and 180%.

In this case, although not particularly limited, the negative ratio of the circumferential main grooves can be between 3% and 30%, for example, to achieve both antiwear performance and drainage performance. Although not particularly limited, the negative ratio of the widthwise grooves can be between 3% and 60% to achieve both steering stability and drainage performance.

Here, to make the negative ratio of the widthwise grooves relatively large, the extension length can be secured by adopting a curved shape for the widthwise grooves, for example, or the groove width of the widthwise grooves can be increased, for example (a non-limiting example being 1 mm or more). Alternatively, the pitch length in the tire circumferential direction can be reduced (a non-limiting example being 50 mm or less). An asymmetrical pattern may be adopted. For example, one circumferential main groove can be arranged in one of the half portions in the tire width direction divided by the tire equatorial plane CL, with no circumferential main grooves provided in the other half portion in the tire width direction. The pitch length of the widthwise grooves in the one half portion can be smaller (than in the other half portion), or in the above other half portion, the extension length can be secured by adopting a curved shape for the widthwise grooves.

As an example, the tire 10 includes one or more (for example, one) circumferential main grooves extending in the tire circumferential direction on the tread surface of the tread portion 13. Here, the negative ratio of the circumferential main grooves in one half portion, on the vehicle-installed inside, of the tread surface of the tread portion 13 in the tire width direction is preferably smaller than the negative ratio of the circumferential main grooves in the other half portion, on the vehicle-installed outside, of the tread surface of the tread portion 13 in the tire width direction. For example, a circumferential main groove can be located on the tire equatorial plane CL, with the center of the groove width being offset from the tire equatorial plane towards the other side in the tire width direction (the vehicle-installed outside).

According to this configuration, the rigidity of the land portion on the vehicle-installed inside, which is prone to wear (especially during negative camber), can be secured to improve the wear resistance of the tire. In addition, compared to the case in which the negative ratios on both the vehicle-installed outside and the vehicle-installed inside are decreased, a reduction in the drainage performance of the tire can be suppressed. Compared to the case in which the negative ratios on both the vehicle-installed outside and the vehicle-installed inside are increased, a reduction in the wear resistance of the tire can be suppressed.

Here, the negative relationship of the negative ratio in one half portion in the tire width direction (vehicle-installed inside) to the negative ratio in the other half portion in the tire width direction (vehicle-installed outside) is preferably 20% to 99%. By the aforementioned negative relationship being set to 20% or more, the rigidity of the land portion on the vehicle-installed inside can be further secured for further improvement in the wear resistance of the tire, whereas by the aforementioned negative relationship being set to 99% or less, the drainage performance on the vehicle-installed inside can also be secured. For the same reason, the aforementioned negative relationship is more preferably between 30% and 90%.

In this case, although not particularly limited, the negative ratio in the other half portion in the tire width direction (vehicle-installed outside) can be between 8% and 40%, for example. Although not particularly limited, the negative ratio in the one half portion in the tire width direction (vehicle-installed inside) can be between 2% and 39%, for example.

As another example, the tire 10 includes one or more (for example, one) circumferential main grooves extending in the tire circumferential direction on the tread surface of the tread portion 13. Here, the negative ratio of the circumferential main grooves in one half portion, on the vehicle-installed inside, of the tread surface of the tread portion 13 in the tire width direction is greater than the negative ratio of the circumferential main grooves in the other half portion, on the vehicle-installed outside, of the tread surface of the tread portion 13 in the tire width direction. For example, a circumferential main groove can be located on the tire equatorial plane CL, with the center of the groove width being offset from the tire equatorial plane towards one side in the tire width direction (the vehicle-installed outside).

According to this configuration, the hydroplaning performance of the tire during straight running can be improved by securing the groove area on the vehicle-installed inside, where the ground contact length is usually longer (especially during negative camber) (especially when used as a front wheel). Compared to the case in which the negative ratios on both the vehicle-installed outside and the vehicle-installed inside are increased, a reduction in the wear resistance of the tire can be suppressed. Compared to the case in which the negative ratios on both the vehicle-installed outside and the vehicle-installed inside are decreased, a reduction in the drainage performance of the tire can be suppressed.

Here, the negative relationship of the negative ratio in the other half portion in the tire width direction (vehicle-installed outside) to the negative ratio in the one half portion in the tire width direction (vehicle-installed inside) is preferably 20% to 99%. By the aforementioned negative relationship being set to 20% or more, the groove volume on the vehicle-installed inside can be further secured for further improvement in the hydroplaning performance of the tire during straight running, whereas by the aforementioned negative relationship being set to 99% or less, the wear resistance of the tire can also be secured. For the same reason, the aforementioned negative relationship is more preferably between 30% and 90%.

In this case, although not particularly limited, the negative ratio in the other half portion in the tire width direction (vehicle-installed outside) can be between 2% and 40%, for example. Although not particularly limited, the negative ratio in the one half portion in the tire width direction (vehicle-installed inside) can be between 8% and 41%, for example.

In the case in which the tire/wheel assembly includes an in-wheel motor and a power reception device, the tread portion preferably includes a land portion located on the tire equatorial plane, and the width of this land portion in the tire width direction is preferably 15% or more of the tread width when the tire/wheel assembly is filled to the prescribed internal pressure and under no load. Even when a large torque is instantaneously applied to the tread portion of the tire by the in-wheel motor being driven, deformation of the land portion can be suppressed, and the wear resistance of the tire can be improved, since the width in the tire width direction of the land portion on the tire equatorial plane, where the largest torque is applied, is 15% or more of the tread width, and rigidity is high. For the same reason, the width of the land portion in the tire width direction is more preferably 20% or more of the tread width. For the same reason, the width of the land portion in the tire width direction is more preferably 30% or more of the tread width. To improve wear resistance by appropriately reducing the rigidity of the land portion on the tire equatorial plane, the width in the tire width direction of the land portion on the tire equatorial plane is preferably 70% or less of the tread width.

The "tread width" refers to the tire widthwise distance between the ground edges (both ends of the aforementioned contact patch in the tire width direction) when the tire/wheel assembly is filled to the prescribed internal pressure and under no load.

As an example not covered by the claims, when the tire/wheel assembly is filled to the prescribed internal pressure and under no load, and a point on the tread surface located 1/8 of the tread width TW inward in the tire width direction from the tread edge TE in a tire widthwise cross-sectional view is designated as a 1/8 point (point P), a thickness T2 of the tread portion 13 at the 1/8 point (point P) is preferably smaller than a thickness T1 of the tread portion 13 on the tire equatorial plane CL.

According to this configuration, the magnetic flux passing through the 1/8 point is less prone to being obstructed by the tread rubber from reaching the power reception coil 31 (for example, when the ring of the power transmission coil 41 is arranged at an inclination to the road surface), thus improving the power receiving efficiency. In addition, compared to the case in which the tread thickness is reduced over the entire area in the tire width direction, the wear resistance of the tire can also be secured. The aforementioned effects can be obtained as long as the arrangement of the power transmission coil 41 and the power reception coil 31 is such that at least a portion of the magnetic flux can pass through the 1/8 point.

The tire 10 can be configured so that, in the aforementioned condition, the thickness T2 of the tread portion 13 at the 1/8 point (point P) is smaller than the thickness T1 of the tread portion 13 on the tire equatorial plane CL at both half portions in the tire width direction divided by the tire equatorial plane CL, or so that, in the aforementioned condition, the thickness T2 of the tread portion 13 at the 1/8 point (point P) is smaller than the thickness T1 of the tread portion 13 on the tire equatorial plane CL in only one of the half portions.

Here, the ratio T2/T1 of the thickness T2 of the tread portion at the 1/8 point to the thickness T1 of the tread portion on the tire equatorial plane is preferably between 60% and 99%. By the ratio T2/T1 being set to 60% or more, the wear resistance of the tire can be improved, whereas by the ratio T2/T1 being set to 99% or less, the power receiving efficiency can be further improved. For the same reason, the ratio T2/T1 is more preferably between 65% and 95%.

The thickness of the tread portion also preferably decreases gradually from the tire equatorial plane CL toward the 1/8 point (point P). The reason is that the power receiving efficiency can be improved while avoiding the generation of a step in rigidity in the tire width direction.

Between the tire equatorial plane CL and the 1/8 point (point P), a step can be provided in the thickness of the tread so that the aforementioned thickness T2 becomes smaller than the aforementioned thickness T1. In this case, the step is preferably provided with a circumferential main groove as the boundary (i.e., so that no step occurs within one land portion).

Here, in the aforementioned case, the thickness T1 of the tread portion on the tire equatorial plane is preferably between 8 mm and 25 mm. By the thickness T1 being set to 8 mm or more, the wear resistance of the tire can be improved, whereas by the thickness T1 being set to 25 mm or less, the fuel efficiency can be improved, and the amount of magnetic flux that passes through the tire equatorial plane and is obstructed by the tread rubber can be reduced, thereby improving the power receiving efficiency.

In the aforementioned case, the thickness T2 of the tread portion at the 1/8 point is preferably between 5 mm and 24 mm. By the thickness T2 being set to 5 mm or more, the wear resistance of the tire can be improved, whereas by the thickness T2 being set to 24 mm or less, the fuel efficiency can be improved, and the amount of magnetic flux that passes through the 1/8 point and is obstructed by the tread rubber can be reduced, thereby improving the power receiving efficiency.

In this case, the thickness T1 of the tread portion on the tire equatorial plane is considered by tracing a virtual line assuming the absence of grooves in the case in which grooves are provided, and is also considered by tracing a virtual line assuming the absence of grooves when a groove is present at the 1/8 point.

When referring to the relationship between T1 and T2, the thickness of the tread portion is the thickness measured in the direction of the normal line to the line (or virtual line) that forms the tread surface at the corresponding position.

In the case in which the thickness of the tread portion at the 1/8 point (point P) differs between the tread width direction half portions divided by the tire equatorial plane CL, the aforementioned effects can be efficiently obtained for the magnetic flux that is generated diagonally outward from the road surface and passes through the 1/8 point (point P) on the vehicle-installed inside when the thickness of the tread portion at the 1/8 point (point P) on the vehicle-installed inside is smaller than the thickness of the tread portion at the 1/8 point (point P) on the vehicle-installed outside, whereas the aforementioned effects can be efficiently obtained for the magnetic flux that is generated diagonally inward from the road surface and passes through the 1/8 point (point P) on the vehicle-installed outside when the thickness of the tread portion at the 1/8 point (point P) on the vehicle-installed outside is smaller than the thickness of the tread portion at the 1/8 point (point P) on the vehicle-installed inside.

In the embodiments of the invention, when the tire/wheel assembly 3 is filled to the prescribed internal pressure and under no load, and a point on the tread surface located 1/8 of the tread width TW inward in the tire width direction from the tread edge TE in a tire widthwise cross-sectional view is designated as a 1/8 point (point P), the thickness T1 of the tread portion 13 on the tire equatorial plane CL is also smaller than the thickness T2 of the tread portion 13 at the 1/8 point (point P).

According to this configuration, the magnetic flux passing through the tire equatorial plane is less prone to being obstructed by the tread rubber from reaching the power reception coil 31 (for example, when the ring of the power transmission coil 41 is arranged in parallel with the road surface), thus improving the power receiving efficiency. In addition, compared to the case in which the tread thickness is reduced over the entire area in the tire width direction, the wear resistance of the tire can also be secured.

The aforementioned effects can be obtained as long as the arrangement of the power transmission coil 41 and the power reception coil 31 is such that at least a portion of the magnetic flux can pass through the tire equatorial plane.

The tire 10 can be configured so that, in the aforementioned condition, the thickness T1 of the tread portion 13 on the tire equatorial plane CL is smaller than the thickness T2 of the tread portion 13 at the 1/8 point (point P) at both half portions in the tire width direction divided by the tire equatorial plane CL, or so that, in the aforementioned condition, the thickness T1 of the tread portion 13 on the tire equatorial plane CL is smaller than the thickness T2 of the tread portion 13 at the 1/8 point (point P) in only one of the half portions.

Here, the ratio T2/T1 of the thickness T2 of the tread portion at the 1/8 point to the thickness T1 of the tread portion on the tire equatorial plane is preferably between more than 100% and 120%. By the ratio T2/T1 being set to more than 100%, the wear resistance of the tire can be improved, whereas by the ratio T2/T1 being set to 120% or less, the power receiving efficiency can be further improved. For the same reason, the ratio T2/T1 is more preferably between 103% and 115%.

The thickness of the tread portion also increases gradually from the tire equatorial plane CL toward the 1/8 point (point P). The reason is that the power receiving efficiency can be improved while avoiding the generation of a step in rigidity in the tire width direction.

Between the tire equatorial plane CL and the 1/8 point (point P), in an example not covered by the claims, a step can be provided in the thickness of the tread so that the aforementioned thickness T1 becomes smaller than the aforementioned thickness T2. In this case, the step is preferably provided with a circumferential main groove as the boundary (i.e., so that no step occurs within one land portion).

In the aforementioned case, the thickness T1 of the tread portion on the tire equatorial plane is preferably between 8 mm and 25 mm. By the thickness T1 being set to 8 mm or more, the wear resistance of the tire can be improved, whereas by the thickness T1 being set to 25 mm or less, the fuel efficiency can be improved, and the amount of magnetic flux that passes through the tire equatorial plane and is obstructed by the tread rubber can be reduced, thereby improving the power receiving efficiency.

In the aforementioned case, the thickness T2 of the tread portion at the 1/8 point is preferably between 8 mm and 30 mm. By the thickness T2 being set to 8 mm or more, the wear resistance of the tire can be improved, whereas by the thickness T2 being set to 30 mm or less, the fuel efficiency can be improved, and the amount of magnetic flux that passes through the 1/8 point and is obstructed by the tread rubber can be reduced, thereby improving the power receiving efficiency.

In the case in which the thickness of the tread portion at the 1/8 point (point P) differs between the tread width direction half portions divided by the tire equatorial plane CL, the aforementioned effects can be efficiently obtained for the magnetic flux that is generated diagonally outward from the road surface and passes through the 1/8 point (point P) on the vehicle-installed inside when the thickness of the tread portion at the 1/8 point (point P) on the vehicle-installed inside is smaller than the thickness of the tread portion at the 1/8 point (point P) on the vehicle-installed outside, whereas the aforementioned effects can be efficiently obtained for the magnetic flux that is generated diagonally inward from the road surface and passes through the 1/8 point (point P) on the vehicle-installed outside when the thickness of the tread portion at the 1/8 point (point P) on the vehicle-installed outside is smaller than the thickness of the tread portion at the 1/8 point (point P) on the vehicle-installed inside.

The internal pressure of the tire/wheel assembly is preferably between 120 kPa and 200 kPa. By the internal pressure being set to 200 kPa or less, the footprint area increases. When the footprint area is small, a space is created between the tire and the road surface, and water, foreign matter, or the like can enter the space and obstruct the magnetic flux, lowering the power receiving efficiency. However, by the footprint area increasing, the space between the tire and the road surface can be eliminated, so that the magnetic flux is not obstructed by water, foreign matter, or the like, thereby improving the power receiving efficiency. In addition, by the internal pressure being set to 200 kPa or less, the sidewall portion of the tire can easily flex, reducing the distance between the power reception coil and the power transmission coil. This also improves the power receiving efficiency. According to the tire/wheel assembly of the present embodiment, the internal pressure is set to 120 kPa or more, which can also reduce the rolling resistance and improve the fuel efficiency.

Here, the internal pressure is more preferably between 140 kPa and 180 kPa. Such a range can further improve the power receiving efficiency while further improving the fuel efficiency.

The internal pressure is even more preferably between 150 kPa and 170 kPa. Such a range can even further improve the power receiving efficiency while even further improving the fuel efficiency.

The above Relational Expressions (1) and/or (2) between SW and OD are preferably satisfied upon filling to the aforementioned internal pressure.

Alternatively, the internal pressure of the tire/wheel assembly is also preferably more than 200 kPa and preferably 400 kPa or less. By the internal pressure being set to more than 200 kPa, the rolling resistance can be reduced and fuel efficiency can be improved. By the internal pressure being set to 400 kPa or less, the footprint area increases. When the footprint area is small, a space is created between the tire and the road surface, and water, foreign matter, or the like can enter the space and obstruct the magnetic flux, lowering the power receiving efficiency. However, by the footprint area increasing, the space between the tire and the road surface can be eliminated, so that the magnetic flux is not obstructed by water, foreign matter, or the like, thereby improving the power receiving efficiency. In addition, by the internal pressure being set to 400 kPa or less, the sidewall portion of the tire can easily flex, reducing the distance between the power reception coil and the power transmission coil. This also improves the power receiving efficiency.

Here, the internal pressure is more preferably between 260 kPa and 350 kPa. Such a range can further improve fuel efficiency while further improving the power receiving efficiency. The internal pressure is even more preferably between 300 kPa and 320 kPa. Such a range can even further improve the fuel efficiency while even further improving the power receiving efficiency.

The above Relational Expressions (1) and/or (2) between SW and OD are preferably satisfied upon filling to the aforementioned internal pressure.

(Wheel)

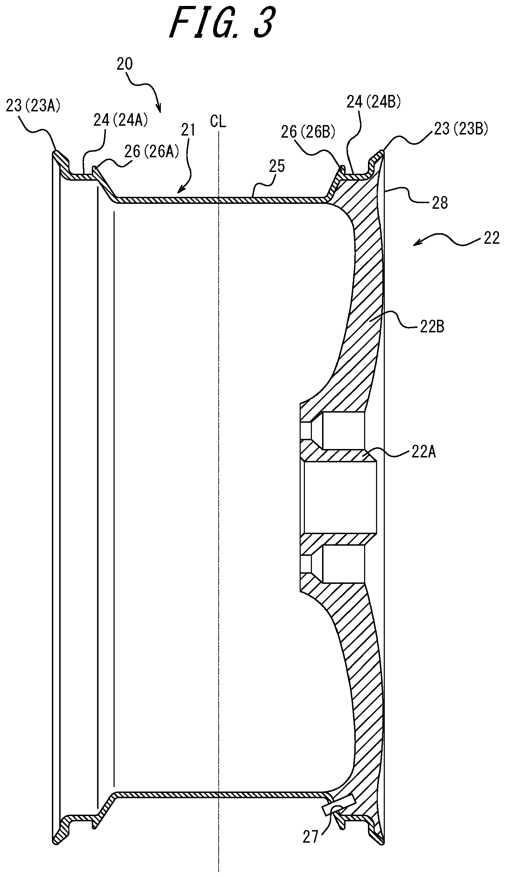

Next, the configuration of the wheel 20 is described. FIG. 3 is a cross-sectional view in the tire width direction of a wheel 20 according to an embodiment.

As illustrated in FIG. 3, the wheel 20 includes a cylindrical rim 21 and a disk 22 provided on the radial inner side of the rim 21 and fixed in a supporting manner to the hub 2A of the vehicle 2.

The rim 21 includes, from the outside in the width direction of the wheel, a pair of flanges 23 (inner flange 23A, outer flange 23B), a pair of bead seats 24 (inner bead seat 24A, outer bead seat 24B), and a well 25. The bead portions 11 of the tire 10 are mounted on the bead seats 24. The flanges 23 extend from the bead seats 24 outward in the radial direction of the wheel and outward in the width direction of the wheel to support the bead portions 11 of the tire 10 from the side. The well 25 has a shape that is concave inward in the radial direction of the wheel between the pair of bead seats 24 to facilitate detachment of the tire. The well 25 has a bottom portion and an inclined surface connecting the bottom portion to the bead seats 24. Furthermore, the bead seats 24 include a pair of humps 26 (inner hump 26A, outer hump 26B) on the widthwise inner side of the wheel. The humps 26 protrude outward in the radial direction of the wheel to prevent the beads of the tire from falling into the well 25.

The rim 21 can be formed from a non-magnetic material, for example.

Non-magnetic materials include paramagnetic and diamagnetic materials with low magnetic permeability. Resin materials can be used as non-magnetic materials, examples of which include thermoplastic resins such as polyester and nylon, thermosetting resins such as vinyl ester resin and unsaturated polyester resins, and other synthetic resins. The resin material can further include fibers of glass, carbon, graphite, aramid, polyethylene, ceramic, and the like as reinforcing fibers. The non-magnetic material is not limited to resin, and any non-metallic material, including rubber, glass, carbon, graphite, aramid, polyethylene, and ceramic, can be used. Furthermore, a metallic material can be used as the non-magnetic material, including a paramagnetic material such as aluminum or a diamagnetic material such as copper. This ensures that the magnetic field reaching the power reception coil 31 from the power transmission coil 41 is not obstructed by the rim 21 and can therefore improve the power receiving efficiency.

Furthermore, the rim 21 of the wheel 20 includes a valve 27 for filling the inner cavity of the tire 10 with a gas, such as air, when the tire 10 is mounted. The valve 27 can be formed from the above-described resin material, for example. Forming the valve 27 from the above-described non-magnetic material can ensure that the magnetic field reaching the power reception coil 31 from the power transmission coil 41 is not obstructed by the valve 27.

The disk 22 includes a ring-shaped mounting portion 22A forming the radial inner end of the disk 22 and a plurality of spokes 22B extending outward from the mounting portion 22A in the radial direction of the wheel. The mounting portion 22A is a portion coupled and fixed to the hub 2A of the vehicle 2 (see FIGS. 1 and 3) and has a mounting hole, which penetrates in the width direction of the wheel, for inserting a bolt or the like to fix the hub 2A and the mounting portion 22A. The outer ends of the spokes 22B in the radial direction of the wheel are coupled integrally to the inner edge of the rim 21 in the radial direction of the wheel.

The disk 22 can, for example, include a metal or a magnetic material having a large magnetic permeability (e.g., a ferromagnetic material), such as ferrite. This can protect the magnetic field reaching the power reception coil 31 from the power transmission coil 41 from being attenuated due to the influence of metal and other magnetic fields located farther outside the tire/wheel assembly 3, and the power receiving efficiency can be improved. For example, in a case in which the disk 22 is made of a resin material, a reduction in the weight of the wheel 20 can be achieved.

The disk 22 of the wheel 20 further includes a wheel cover 28 that covers the outer side of the spokes 22B in the width direction of the wheel. The wheel cover 28 can, for example, include a metal or a magnetic material having a large magnetic permeability (e.g., a ferromagnetic material), such as ferrite. This can protect the magnetic field reaching the power reception coil 31 from the power transmission coil 41 from being attenuated due to the influence of metal and other magnetic fields located farther outside the tire/wheel assembly 3, and the power receiving efficiency can be improved.

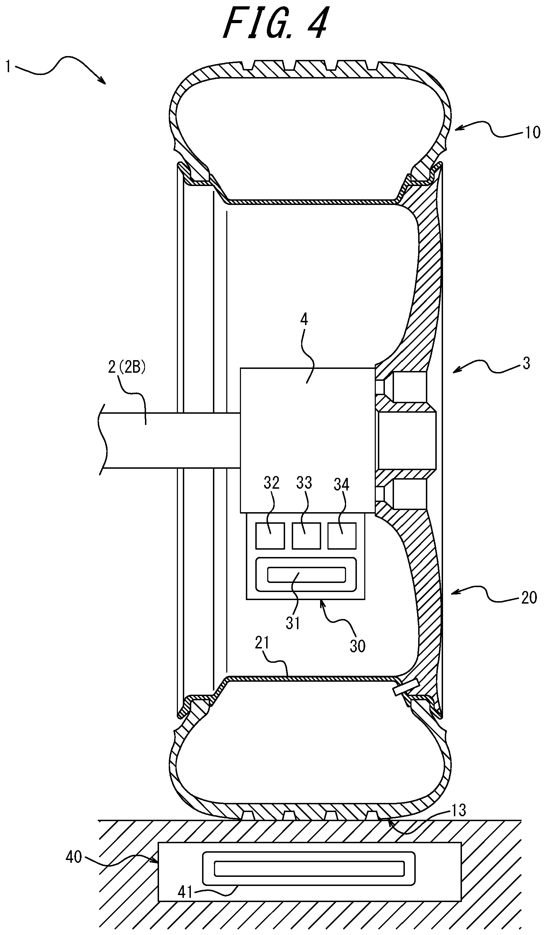

On the inner side of the rim 21 in the tire radial direction, i.e., in the space surrounded by the rim 21 and the disk 22, the wheel 20 is provided with the power reception device 30 (see FIGS. 1 and 4) that receives power supplied wirelessly from outside the tire 10 in the tire radial direction. For example, in the case in which the power reception device 30 is attached to the hub 2A of the vehicle 2, the power reception device 30 is housed in the housing of the wheel 20 by the wheel 20 being attached to the hub 2A of the vehicle 2.

<Power Reception Coil>

Returning to FIG. 1, the power reception device 30 is attached to the hub 2A of the vehicle 2, for example, but this configuration is not limiting. The power reception device 30 can be attached at any position, such as the drive shaft 2B, as long as the power reception device 30 is housed on the tire radial inner side of the rim 21 of the wheel 20 once the wheel 20 is attached to the hub 2A of the vehicle 2. In the present example, the power reception device 30 is configured to be non-rotating relative to the rotation of the tire 10 and wheel 20.

In the present embodiment, power reception coils (secondary coils) 31 are attached to the outer peripheral surface of the bottom portion of the well 25, with four power reception coils 31 arranged at equal intervals (interval d (mm)) along the circumference. Accordingly, in the present embodiment, the power reception coils 31 are configured to rotate together with the rotation of the tire 10 and wheel 20. At this time, the power reception coil 31 changes in position along the circumference as the tire 10 and wheel 20 rotate, but the power reception coil 31 is arranged so as to face the power transmission coil 41 at least at a certain tire rotation angle when the tire/wheel assembly 3 is positioned above the power transmission device 40. With this configuration, when the tire 10 is positioned on the road surface above the power transmission coil 41, and the power transmission coil 41 and the power reception coil 31 face each other, an electromotive force is generated in the power reception coil 31 based on the AC magnetic field generated by the power transmission coil 41. Current thus flows, and power is supplied. The power reception coil 31 is configured to have a ring shape overall and is arranged so that the axial direction of the ring is substantially perpendicular to the road surface. The power reception coil 31 is, for example, wound around a core such as a ferrite core and is configured to have a ring shape overall, but this example is not limiting. The power reception coil 31 can be any coil capable of generating an electromotive force based on an AC magnetic field, such as a coil spring, an air-core coil, or the like.

It suffices for the power reception coil 31 to be at a position capable of facing the power transmission coil 41 when the tire 10 is located on the road surface above the power transmission coil 41. For example, the power reception coil 31 can be attached to the inner circumferential surface of the bottom portion of the well 25, or on the inner or outer circumferential surface of another part of the rim 21. In this case as well, the power reception coil 31 rotates together with the rotation of the tire 10 and wheel 20. Alternatively, the power reception coil 31 can be attached inside the tire/wheel assembly 3. In this case, the power reception coil 31 can be configured to be non-rotating relative to the rotation of the tire 10 and wheel 20. For example, by providing a core that protrudes into the inner cavity of the tire fixed to the wheel 20, the power reception coil 31 can be mounted on the core so that the power reception coil 31 rotates together with the rotation of the tire 10 and wheel 20.

The number of power reception coils 31 is not particularly limited. For example, in a case in which one continuous power reception coil 31 is used along the circumference, continuous power supply is possible while the tire is rolling when the tire is located on the road surface above the power transmission coil 41. The power reception coil 31 can also be divided into multiple pieces, and by reducing the total size of the power reception coil 31, the increase in weight due to the power reception coil 31 can be suppressed to improve the fuel efficiency. In the present embodiment, four power reception devices 30 are included in correspondence with the aforementioned four power reception coils 31, but the number of power reception devices 30 can be any number corresponding to the number of power reception coils 31 or the like. The number of power reception devices 30 can also be different from the number of power reception coils 31.

In the present example, the power reception device 30 includes a power conversion circuit 32, an electricity storage 33, and a controller 34. The power conversion circuit 32 converts the power generated in the power reception coil 31 into direct current (DC) power and supplies the DC power to the electricity storage 33 or other on-board devices in the vehicle 2 via conductive wires or the like. The electricity storage 33 stores the electric power generated by the power reception coil 31. The electricity storage 33 is, for example, a capacitor, but this example is not limiting. The electricity storage 33 can be any electricity storage device, such as a storage battery. In the case in which the electricity storage 33 is a capacitor, charging and discharging is quicker than with a storage battery. For this reason, the electricity storage 33 that is a capacitor is advantageous when a high degree of immediacy is required, such as when storing the electric power generated in the power reception coil 31 while the vehicle 2 drives over the power transmission device 40 provided on the road. The controller 34 may include one or more processors that perform processing for controlling the functions of the power reception device 30. The controller 34 may be a general-purpose processor, such as a central processing unit (CPU) that executes a program specifying control procedures, or a dedicated processor that is specialized for processing of each function. The controller 34 can include any means used to control the power reception device 30, such as storage means for storing programs and the like, and communication means for wired or wireless communication with external electronic devices.

In the case of a configuration such that the power reception coil 31 rotates together with the rotation of the tire 10 and wheel 20, as in the present embodiment, the power generated in the power reception coil 31 can be transmitted to the power conversion circuit 32 and the like via a slip ring, for example. Alternatively, the power generated in the power reception coil 31 can be transmitted (by wire) to a first relay coil, a magnetic field generated by the current flowing in the first relay coil can pass through a second relay coil, causing current to flow in the second relay coil, and power can be transmitted from the second relay coil to the power conversion circuit 32 and the like. In this case, the first and second relay coils are also configured to rotate together with the rotation of the tire 10 and wheel 20, and in the case of the aforementioned example, the relay coils can, for example, be attached to the outer peripheral surface of the well 25.

On the other hand, in the case in which the power reception coil 31 is non-rotating relative to the rotation of the tire 10 and wheel 20 (for example, when the power reception coil 31 is attached to the hub 2A), power can be directly transmitted from the power reception coil 31 to the electricity storage 33 and the like. In this case, in particular, the carcass 14 is preferably made of the aforementioned non-magnetic material, the belt cord is preferably made of the aforementioned non-magnetic material, and the rim 21 of the wheel 20 is preferably made of the aforementioned non-magnetic material to suppress a reduction in the power receiving efficiency.

FIG. 4 is a diagram using a cross-section in the tire width direction to schematically illustrate a wireless power reception system that includes a tire/wheel assembly according to a variation of the present invention.

In the example illustrated in FIG. 4, the tire/wheel assembly 1 includes an in-wheel motor 4. The power reception device 30 is attached to the in-wheel motor 4.

As illustrated in FIG. 4, the power reception device 30 can be attached (to the cover of the hub 2A or the like in the illustrated example) so as to be non-rotating when the tire 10 and wheel 20 rotate.

In this case, in particular, only one power reception device 30 (power reception coil 31) may be arranged at a position facing the road surface. On the other hand, in a case in which the power reception device 30 is attached at a position so as to rotate together with rotation of the tire 10 and wheel 20, as illustrated in FIG. 1, then one or more power reception devices 30 (power reception coils 31) are preferably installed continuously or intermittently in the circumferential direction of the wheel 20.

While embodiments of the present invention have been described above, the present invention is in no way limited to the above embodiments. For example, the vehicle 2 has been described as being an automobile, but this example is not limiting. In addition to automobiles such as passenger vehicles, trucks, buses, and motorcycles, the vehicle 2 may include any vehicle that drives wheels and tires with a power source such as a motor, including tractors and other agricultural vehicles, dump trucks and other construction or building vehicles, electric bicycles, and electric wheelchairs. The vehicle itself may be electrically driven or may be used to supply power for use inside the vehicle.

For example, the tire has been described as being filled with air, but this example is not limiting. The tire can, for example, be filled with a gas such as nitrogen. The tire is not limited to being filled with gas and may be filled with any fluid, including a liquid, a gel-like substance, or a granular material.

The tire has been described as being a tubeless tire provided with an inner liner, but this configuration is not limiting. For example, the tire may be a tube-type tire provided with a tube.

For example, the tire can also be a non-pneumatic tire. In this case as well, it suffices to arrange the power reception coil at a position that can be opposite the power transmission coil.

It is particularly preferable that the tire have a ground contact width of 120 mm or more.

REFERENCE SIGNS LIST

1      Wireless power reception system
2      Vehicle
2A     Hub
2B     Drive shaft
3      Tire/wheel assembly
4      In-wheel motor
10     Tire
11     Bead portion
12     Sidewall portion
13     Tread portion
14     Carcass
14A    Carcass body portion

14B    Carcass folded-up portion
15    Belt
16    Inner liner
17    Circumferential main groove
20    Wheel
21    Rim
22    Disk
22A    Mounting portion
22B    Spoke
23    Flange
24    Bead seat
25    Well
26    Hump
27    Valve
28    Wheel cover
30    Power reception device
31    Power reception coil
32    Power conversion circuit
33    Electricity storage
34    Controller
40    Power transmission device
41    Power transmission coil

**Claims**

1.    A tire/wheel assembly (3) comprising a tire (10) with a tread portion (13) and a wheel (20) with a rim (21), wherein

the tire (10) is mounted on the rim (21), and
the tire/wheel assembly (3) comprises a power reception coil (31), **characterized in that**:

the thickness of the tread portion (10) increases gradually from the tire equatorial plane (CL) toward a point on the tread surface located 1/8 of the tread width inward in the tire width direction from the tread edge, and in a contact patch when the tire/wheel assembly (3) is filled to a prescribed internal pressure and subjected to a maximum load, a rectangle ratio of a ground contact length (LE) at a position, in a tire width direction, located 10% of a ground contact width (W) inward in a tread width direction from an edge in the tire width direction to a ground contact length (LC) at a center of the contact patch in the tire width direction is 50% or more.

2.    The tire/wheel assembly (3) of claim 1, wherein the rectangle ratio is 60% or more.

3.    The tire/wheel assembly (3) of claim 2, wherein the rectangle ratio is 70% or more.

4.    The tire/wheel assembly (3) of claim 3, wherein the rectangle ratio is 80% or more.

5.    The tire/wheel assembly (3) of any one of claims 1 to 4, wherein a thickness of the tread portion (13) is 8 mm to 25 mm.

**Patentansprüche**

1.    Reifen/Rad-Baugruppe (3), die einen Reifen (10) mit einem Laufflächenabschnitt (13) und ein Rad (20) mit einer Felge (21) umfasst, wobei

der Reifen (10) auf der Felge (21) montiert ist und
die Reifen/Rad-Baugruppe (3) eine Leistungsempfangsspule (31) umfasst,
**dadurch gekennzeichnet, dass**:

die Dicke des Laufflächenabschnitts (10) von der Äquatorialebene des Reifens (CL) zu einem Punkt auf der Laufflächenoberfläche hin, der sich bei 1/8 der Laufflächenbreite in der Reifenbreitenrichtung einwärts von der Laufflächenkante befindet, allmählich zunimmt, und

in einer Kontaktfläche, wenn die Reifen/Rad-Baugruppe (3) auf einen vorgeschriebenen Innendruck gefüllt und einer maximalen Belastung ausgesetzt wird, ein Rechteckverhältnis einer Bodenkontaktlänge (LE) an einer Position in einer Reifenbreitenrichtung, die sich in einer Laufflächenbreitenrichtung 10% einer Bodenkontaktbreite (W) einwärts von einer Kante in der Reifenbreitenrichtung befindet, zu einer Bodenkontaktlänge (LC) in einer Mitte der Kontaktfläche in der Reifenbreitenrichtung 50% oder mehr beträgt.

2. Reifen/Rad-Baugruppe (3) nach Anspruch 1, wobei das Rechteckverhältnis 60 % oder mehr beträgt.

3. Reifen/Rad-Baugruppe (3) nach Anspruch 2, wobei das Rechteckverhältnis 70% oder mehr beträgt.

4. Reifen/Rad-Baugruppe (3) nach Anspruch 3, wobei das Rechteckverhältnis 80% oder mehr beträgt.

5. Reifen/Rad-Baugruppe (3) nach einem der Ansprüche 1 bis 4, wobei eine Dicke des Laufflächenabschnitts (13) 8 mm bis 25 mm beträgt.

**Revendications**

1. Ensemble pneu/roue (3) comprenant un pneu (10) avec une partie de bande de roulement (13) et une roue (20) avec une jante (21), dans lequel

le pneu (10) est monté sur la jante (21), et
l'ensemble pneu/roue (3) comprend une bobine de réception d'énergie (31),
**caractérisé en ce que** :

l'épaisseur de la partie de bande de roulement (10) augmente progressivement à partir du plan équatorial de pneu (CL) vers un point sur la surface de la bande de roulement situé à 1/8 de la largeur de la bande de roulement vers l'intérieur dans le sens de la largeur du pneu à partir du bord de la bande de roulement, et dans une zone de contact lorsque l'ensemble pneu/roue (3) est rempli à une pression interne prescrite et soumis à une charge maximale, un rapport rectangulaire d'une longueur de contact au sol (LE) à une position, dans une direction de largeur de pneu, située à 10 % d'une largeur de contact au sol (W) vers l'intérieur dans un sens de la largeur de la bande de roulement à partir d'un bord dans le sens de la largeur du pneu à une longueur de contact au sol (LC) au centre de la zone de contact dans le sens de la largeur du pneu est de 50 % ou plus.

2. Ensemble pneu/roue (3) selon la revendication 1, dans lequel le rapport rectangulaire est de 60 % ou plus.

3. Ensemble pneu/roue (3) selon la revendication 2, dans lequel le rapport rectangulaire est de 70 % ou plus.

4. Ensemble pneu/roue (3) selon la revendication 3, dans lequel le rapport rectangulaire est de 80 % ou plus.

5. Ensemble pneu/roue (3) selon l'une quelconque des revendications 1 à 4, dans lequel l'épaisseur de la partie de bande de roulement (13) est comprise entre 8 mm et 25 mm.

# FIG. 1

**FIG. 2**

# FIG. 3

# FIG. 4

## FIG. 5

## FIG. 6

# FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018068077 A
- JP H08126106 A
- JP 2015003676 A
- US 2016121658 A1

**Non-patent literature cited in the description**

- STANDARDS MANUAL of the ETRTO, and the YEAR BOOK of the TRA. YEAR BOOK. Japan Automobile Tyre Manufacturers Association (JAT-MA)